# EUROPÄISCHE PATENTSCHRIFT

(11) **EP 3 959 083 B1**
(45) Veröffentlichungstag und Bekanntmachung des Hinweises auf die Patenterteilung: **20.03.2024**
(21) Anmeldenummer: 20722475.9
(22) Anmeldetag: 08.04.2020
(51) Int. Cl.: B60B 27/00, B60B 27/02, B60B 29/00, B60B 3/16

(54) **RADLAGERANORDNUNG FÜR EIN KRAFTFAHRZEUG**
WHEEL BEARING ARRANGEMENT FOR A MOTOR VEHICLE
ENSEMBLE DE ROULEMENT DE ROUE POUR UN VÉHICULE À MOTEUR

(30) Priorität: 23.04.2019 DE 102019205782
(43) Veröffentlichungstag der Anmeldung: 02.03.2022
(73) Patentinhaber: Audi AG, 85045 Ingolstadt (DE)
(72) Erfinder: ALBL, Johannes, 85055 Ingolstadt (DE); FRISCH, Michael, 94513 Schönberg (DE)
(86) Internationale Anmeldenummer: PCT/EP2020/060055
(87) Internationale Veröffentlichungsnummer: WO 2020/216623

(56) Entgegenhaltungen:
- EP-A1- 3 351 403
- EP-A1- 3 447 321
- WO-A1-2020/149680
- DE-A1-102006 029 604
- FR-A1- 2 689 061
- FR-A1- 2 928 298
- US-A1- 2012 319 460

## Beschreibung

Die Erfindung betrifft eine Radlageranordnung für ein Kraftfahrzeug gemäß Anspruch 1.

Aus dem Stand der Technik ist beispielsweise die Druckschrift EP 3 351 403 A1 bekannt. Diese beschreibt ein Radlager für ein Kraftfahrzeug, das einen Außenring, einen zumindest teilweise innerhalb des Außenrings angeordneten Innenring und eine in axialer Richtung des Außenrings und des Innenrings von einer Fahrzeuginnenseite zu einer Fahrzeugaußenseite verlaufende Längsachse aufweist. Der Innenring weist an seinem der Fahrzeugaußenseite zugerichteten Ende einen Flanschabschnitt mit einem ersten, am weitesten von einer axialen Mitte des Außenrings beabstandeten Abschnitt und mit einem zweiten Abschnitt, der eine Anlagefläche zum Anbringen einer Bremsscheibe bildet, auf. Der Flanschabschnitt ist derart gestuft ausgebildet, dass die Anlagefläche zum Anbringen der Bremsscheibe gegenüber dem am weitesten von der axialen Mitte des Außenrings beabstandeten Abschnitt des Flanschabschnitts in axialer Richtung zu der Fahrzeuginnenseite hin versetzt angeordnet ist und dass sich auf der der Anlagefläche zum Anbringen der Bremsscheibe gegenüberliegenden Seite ein zumindest bereichsweise umlaufender Vorsprung befindet.

Weiterhin beschreibt die Druckschrift EP 3 447 321 A1 eine Radlageranordnung für ein Kraftfahrzeug mit einer Radnabe und einem Radlager zur drehbaren Lagerung der Radnabe an einem Radträger, wobei das Radlager einen Außenring und einen bezüglich des Außenrings um eine Drehachse drehbaren Innenring aufweist, der mit der Radnabe verbunden ist, wobei von der Radnabe ein Radflansch ausgeht, der eine in axialer Richtung gesehen in die von dem Außenring abgewandte Richtung offene Bremsscheibenaufnahme aufweist, die im Längsschnitt bezüglich der Drehachse gesehen durch einen Rücksprung des Radflanschs gebildet ist und eine Anlagefläche für eine Bremsscheibe aufweist. An der Radnabe ist ein Gelenkwellenflansch befestigt. In dem Radflansch ist auf seiner dem Außenring zugewandten Seite ein Dichtungsaufnahmeraum ausgebildet.

Es ist Aufgabe der Erfindung, eine Radlageranordnung für ein Kraftfahrzeug vorzuschlagen, welche gegenüber bekannten Radlageranordnungen Vorteile aufweist, insbesondere eine schnellere und präzisere Montage des Rads an dem Radflansch ermöglicht.

Diese Aufgabe wird erfindungsgemäß mit einer Radlageranordnung für ein Kraftfahrzeug mit den Merkmalen des Anspruchs 1 gelöst. Dabei ist vorgesehen, dass von der Radnabe ein Felgenzentriersitzelement ausgeht, das sich in die der Bremsscheibenanlagefläche bezüglich der Bremsscheibenaufnahme gegenüberliegende Richtung erstreckt.

Die Radlageranordnung dient der drehbaren Lagerung wenigstens eines Rads an einer Karosserie des Kraftfahrzeugs. Die Radlageranordnung ist dabei bevorzugt Bestandteil einer Radaufhängung, welche der Aufhängung, insbesondere der federnden Aufhängung, des Rads bezüglich der Karosserie dient. Das Rad ist an dem Radträger der Radlageranordnung drehbar gelagert. Hierzu ist das Rad an dem Radflansch befestigbar, welcher mit der Radnabe verbunden ist, die schlussendlich mittels des Radlagers an dem Radträger drehbar gelagert ist. Das Radlager verfügt über den Innenring und den Außenring. Es liegt bevorzugt als Wälzlager vor, insbesondere als einreihiges oder mehrreihiges Wälzlager, sodass zwischen dem Innenring und dem Außenring zur Reibungsreduzierung Wälzkörper angeordnet sind, die in nur einer oder - alternativ - mehreren Reihen vorliegen.

Der Außenring ist an dem Radträger befestigt beziehungsweise befestigbar, während der Innenring mit der Radnabe und mithin dem Radflansch verbunden beziehungsweise mit ihnen verbindbar ist. Der Innenring kann einstückig und/oder materialeinheitlich mit der Radnabe und/oder dem Radflansch ausgestaltet sein, insoweit also in diese integriert sein. Selbstverständlich können auch mehrere Innenringe vorliegen, wobei einer oder mehrere dieser Innenringe separat von der Radnabe oder - alternativ - einstückig und/oder materialeinheitlich mit der Radnabe ausgeführt sein können. Es kann also wenigstens einer der Innenringe, zum Beispiel genau einer der Innenringe, in die Radnabe integriert und hierzu beispielsweise einstückig und/oder materialeinheitlich mit dieser ausgestaltet sein, wohingegen ein anderer der Innenringe separat von dem Radflansch ausgebildet und nachfolgend an ihm befestigt wird.

Der Radflansch geht in radialer Richtung von der Radnabe aus und erstreckt sich ausgehend von dieser in radialer Richtung nach außen. Das bedeutet in anderen Worten, dass die Radnabe im Längsschnitt gesehen in radialer Richtung bezüglich der Drehachse weiter innenliegend angeordnet ist als der Radflansch, welcher entsprechend weiter außenliegend angeordnet ist. Der Radflansch dient grundsätzlich der Befestigung des Rads. Vorzugsweise ist der Radflansch zur Verschraubung mit dem Rad vorgesehen und ausgebildet, insbesondere weist er hierzu wenigstens eine Radbolzenaufnahme für einen Radbolzen auf.

Nach einer Montage des Rads an dem Radflansch greift der Radbolzen einerseits an dem Rad und andererseits an dem Radflansch an und hält diese aneinander. Beispielsweise liegt das Rad hierbei an einer Radflanschstirnseite des Radflanschs an, und wird von dem Radbolzen in Richtung der Radbolzenaufnahme gedrängt. In axialer Richtung ist die Radflanschstirnseite, in welcher das Rad nach seiner Montage anliegt, von der Radbolzenaufnahme beabstandet, nämlich durch die Bremsscheibenaufnahme. Das bedeutet, dass im Längsschnitt gesehen die Bremsscheibenaufnahme in axialer Richtung beziehungsweise im Längsschnitt gesehen zwischen der Radflanschstirnseite und der Radbolzenaufnahme vorliegt. Die Radflanschstirnseite kann auch als Radanlagefläche bezeichnet werden.

Die Bremsscheibenaufnahme dient der Aufnahme einer Bremsscheibe, welche Bestandteil einer Bremsanlage des Kraftfahrzeugs sein kann. Die Bremsscheibenanlagefläche begrenzt die Bremsscheibenaufnahme in axialer Richtung, sodass die Bremsscheibe nach ihrer Montage an dem Radflansch, genauer gesagt an der Bremsscheibenanlagefläche in axialer Richtung anliegt, insbesondere flächig anliegt. Die Bremsanlage weist bevorzugt zusätzlich zu der Bremsscheibe wenigstens eine Bremsbacke auf, die bezüglich der Bremsscheibe verlagerbar ist und in wenigstens einer Stellung bremsend mit der Bremsschreibe zusammenwirkt. In der wenigstens einen Stellung wird also mittels der Bremsbacke und der Bremsscheibe eine Bremskraft beziehungsweise ein Bremsmoment auf den Radflansch ausgeübt.

In radialer Richtung nach innen wird die Bremsscheibenaufnahme von einer Außenumfangsfläche des Radflanschs begrenzt, die durch den Rücksprung des Radflanschs gebildet ist. Die Außenumfangsfläche ist im Längsschnitt gesehen vorzugsweise größtenteils oder durchgehend eben, sodass sie zumindest teilweise als Kegelmantelfläche vorliegt. Die Außenumfangsfläche kann bezüglich der Drehachse parallel angeordnet oder bezüglich der Längsmittelachse angewinkelt sein. In letzterem Fall liegt die Außenumfangsfläche als Schrägfläche vor. Die Außenumfangsfläche erstreckt sich in axialer Richtung gesehen bevorzugt von der Radbolzenaufnahme bis hin zu der Radflanschstirnseite, an welcher das Rad nach seiner Montage anliegt.

Die Radflanschstirnseite kann insoweit auch als Radanlagefläche bezeichnet werden.

Die Bremsscheibe weist bevorzugt in axialer Richtung höchstens dieselben Abmessungen auf wie die Bremsscheibenaufnahme, vorzugsweise jedoch kleinere Abmessungen, sodass sie nach ihrer Montage in axialer Richtung vollständig in der Bremsscheibenaufnahme aufgenommen ist. In radialer Richtung steht die Bremsscheibe hingegen nach ihrer Montage über den Radflansch über, weist also einen größeren Durchmesser bezüglich der Drehachse auf als dieser. Das Rad und/oder die Bremsscheibe sind jeweils optional Bestandteil der beschriebenen Radlageranordnung. In anderen Worten umfasst die Radlageranordnung optional das Rad, nicht jedoch die Bremsscheibe, oder die Bremsscheibe, nicht jedoch das Rad, oder sowohl das Rad als auch die Bremsscheibe.

Der Radflansch weist auf seiner dem Außenring in axialer Richtung zugewandten Seite den Dichtungsaufnahmeraum auf, in welchem die Radlagerdichtung angeordnet ist. Die Radlagerdichtung liegt einerseits dichtend an dem Radflansch und andererseits dichtend an dem Außenring an, sodass das Radlager gegenüber einer Außenumgebung zuverlässig abgedichtet ist, zumindest von Seiten des Radflanschs. Bevorzugt ist auf der der Dichtung in axialer Richtung abgewandten Seite des Radlagers eine weitere Dichtung angeordnet, nämlich - im Falle der Ausgestaltung des Radlagers als Wälzlager - auf der in radialer Richtung der Dichtung gegenüberliegenden Seite der Wälzkörper. Die Radlagerdichtung ist beispielsweise drehfest an dem Radflansch befestigt und liegt insoweit dichtend drehbar an dem Außenring an. Alternativ ist es vorgesehen, dass die Radlagerdichtung drehfest an dem Außenring befestigt ist und insoweit drehbar dichtend an dem Radträger anliegt. Die beschriebene Ausgestaltung der Radlageranordnung ermöglicht eine in axialer Richtung äußerst kompakte Gestaltung.

Um ein besonders schnelles, einfaches und präzises Montieren des Rads an dem Radflansch zu ermöglichen, geht von der Radnabe das Felgenzentriersitzelement aus. Dieses erstreckt sich in die der Bremsscheibenanlagefläche bezüglich der Bremsscheibenaufnahme gegenüberliegende Richtung. In anderen Worten ist im Längsschnitt gesehen die Bremsscheibenaufnahme in axialer Richtung zwischen dem Felgenzentriersitzelement und der Bremsschiebenanlagefläche angeordnet. Beispielsweise schließt sich das Felgenzentriersitzelement in axialer Richtung an die Radanlagefläche an beziehungsweise wird von einer die Radanlagefläche in Umfangsrichtung bezüglich der Drehachse durchgehend aufnehmenden gedachten Ebene geschnitten. Das bedeutet, dass die gedachte Ebene zum einen in Umfangsrichtung durchgehend zumindest einen Bereich der Radanlagefläche in sich aufnimmt und zum anderen durch das Felgenzentriersitzelement verläuft.

Das Felgenzentriersitzelement bildet einen Felgenzentriersitz für das Rad beziehungsweise für eine Felge des Rads aus. Der Felgenzentriersitz bewirkt ein Zentrieren des Rads bezüglich der Drehachse bevor das Rad an dem Radflansch befestigt wird beziehungsweise wirkt zum Zentrieren des Rads mit dem Rad zusammen. Unter dem Rad ist in im Rahmen dieser Beschreibung zumindest eine Felge des Rads zu verstehen, welche nicht notwendigerweise mit einem Reifen beziehungsweise einer Bereifung versehen sein muss. Vorzugsweise setzt sich das Rad jedoch aus der Felge und dem Reifen beziehungsweise der Bereifung zusammen.

Von der Radnabe gehen also sowohl der Radflansch als auch das Felgenzentriersitzelement aus, nämlich der Radflansch in radialer Richtung und das Felgenzentriersitzelement in axialer Richtung. Besonders bevorzugt ist das Felgenzentriersitzelement einstückig und/oder materialeinheitlich mit der Radnabe ausgestaltet. Beispielsweise sind die Radnabe, der Radflansch und das Felgenzentriersitzelement einstückig und materialeinheitlich miteinander ausgebildet, sodass die Radlageranordnung besonders kompakt und leichtgewichtig ist.

Zur Ausbildung des Felgenzentriersitzes weist das Felgenzentriersitzelement beispielsweise eine zylindrische, insbesondere kreiszylindrische, Außenumfangsfläche auf. Von dieser kann ein Radialvorsprung ausgehen, welcher sich von dieser Außenumfangsfläche in radialer Richtung nach außen erstreckt. Der Radialvorsprung dient der Reduzierung einer Kontaktfläche zwischen dem Rad beziehungsweise der Felge des Rads einerseits und dem Felgenzentriersitzelement andererseits, um ein Festsetzen des Rads, beispielsweise aufgrund von Witterungseinflüssen, Korrosion und/oder Verkanten, verhindert wird.

Der Radialvorsprung kann in Umfangsrichtung durchgehend ausgebildet sein. Besonders bevorzugt ist jedoch eine Segmentierung des Radialvorsprungs, sodass sich der Radialvorsprung aus mehreren in Umfangsrichtung voneinander beabstandeten Radialvorsprungssegmenten zusammensetzt. Im Falle einer solchen Ausgestaltung kann es zudem vorgesehen sein, dass die Radialvorsprungssegmente in Bereichen der Außenumfangsfläche vorliegen, welche auf einer gedachten Zylindermantelfläche eines Zylinders, insbesondere eines Kreiszylinders liegen, sodass diese Bereiche konvex sind. Zwischen den Radialvorsprungssegmenten kann hingegen die Außenumfangsfläche von der genannten Mantelfläche abweichen und beispielsweise konkav ausgestaltet sein. Hierdurch wird das Festsetzen des Rads besonders effektiv vermieden und gleichzeitig ein geringes Gewicht der Radlageranordnung erzielt.

Eine Weiterbildung der Erfindung sieht vor, dass der Dichtungsaufnahmeraum in radialer Richtung ein dem Radflansch zugewandtes Außenringende des Außenrings übergreift. In anderen Worten erstreckt sich der Dichtungsaufnahmeraum in radialer Richtung weiter nach außen als das Außenringende des Außenrings oder sogar als der gesamte Außenring. Unter dem Au-ßenringende ist dasjenige Ende des Außenrings zu verstehen, welches dem Radflansch zugewandt ist, welches dem Radflansch und/oder der Radanlagefläche in axialer Richtung am nächsten liegt. Eine solche Ausgestaltung des Dichtungsaufnahmeraums ermöglicht es, den Außenring besonders nah an dem Rad anzuordnen, beispielsweise derart, dass der Außenring bündig mit dem Radflansch abschließt oder sogar in den Dichtungsaufnahmeraum eingreift. Hierdurch wird eine in axialer Richtung besonders kompakte Radlageranordnung erzielt.

Das Außenringende liegt beispielsweise an einem Außenringvorsprung vor, der sich in axialer Richtung ausgehend von einem Grundkörper des Außenrings in Richtung des Dichtungsaufnahmeraums erstreckt. Der Außenringvorsprung weist hierbei in radialer Richtung geringere Abmessungen auf als der Außenring insgesamt, insbesondere an dem Außenringende. Bevorzugt weist der Außenringvorsprung auf seinem dem Dichtungsaufnahmeraum zugewandten Ende, also an dem Außenringende, eine Erstreckung in radialer Richtung auf, die höchstens 50 %, höchstens 25 % oder höchstens 10 % der größten Erstreckung des Außenrings in derselben Richtung entspricht.

Eine Weiterbildung der Erfindung sieht vor, dass der Außenring des Radlagers mit einer dem Außenring zugewandten Radflanschstirnseite des Radflansches bündig abschließt oder zumindest mit einem Außenringvorsprung in den Dichtungsaufnahmeraum eingreift. Hierauf wurde vorstehend bereits hingewiesen. Unter der Radflanschstirnseite ist eine der Radanlagefläche gegenüberliegende Stirnseite des Radflanschs zu verstehen. In axialer Richtung gesehen begrenzt also die Radanlagefläche den Radflansch in einer ersten Richtung und die Radflanschstirnseite in einer der ersten Richtung gegenüberliegenden zweiten Richtung. Die Radflanschstirnseite wird von dem Dichtungsaufnahmeraum durchgriffen, sodass also der Dichtungsaufnahmeraum randoffen in dem Radflansch vorliegt und über die Radflanschstirnseite in eine Außenumgebung einmündet.

Vorzugsweise liegt die Radflanschstirnseite in Umfangsrichtung durchgehend in einer gedachten Ebene, welche besonders bevorzugt senkrecht auf der Drehachse steht. Besonders bevorzugt kann es vorgesehen sein, dass wenigstens ein Wälzkörper des Radlagers in axialer Richtung gesehen ebenfalls in Überdeckung mit dem Radflansch angeordnet ist, also insbesondere auf einer der Radanlagefläche zugewandten Seite der die Radflanschstirnseite in Umfangsrichtung vorzugsweise durchgehend aufnehmenden gedachten Ebene angeordnet ist und/oder von dieser Ebene geschnitten wird.

Der Außenring schließt bündig mit der Radflanschstirnseite ab. Das bedeutet, dass der Außenring in axialer Richtung gesehen unmittelbar an die Radflanschstirnseite angrenzt. Weil er hierbei in radialer Richtung in Überlappung mit dem Dichtungsaufnahmeraum angeordnet ist, wird dennoch ein Berührkontakt zwischen dem Außenring und dem Radflansch vermieden. In anderen Worten sind der Außenring und der Radflansch berührungsfrei beziehungsweise kontaktfrei zueinander angeordnet, obwohl der Außenring mit der Radflanschstirnseite bündig abschließt. Dies gilt im Übrigen auch, falls der Außenring oder zumindest der Außenringvorsprung in den Dichtungsaufnahmeraum eingreift.

Unter dem Außenringvorsprung ist - wie bereits erläutert - ein Fortsatz des Außenrings zu verstehen, welcher beispielsweise in radialer Richtung geringere Abmessungen aufweist als andere Bereiche des Außenrings. Es kann beispielsweise vorgesehen sein, dass sich der Dichtungsaufnahmeraum in radialer Richtung lediglich weiter nach außen erstreckt als der Außenringvorsprung, nicht jedoch der gesamte Außenring. In anderen Worten übergreift der Dichtungsaufnahmeraum in radialer Richtung lediglich den Außenringvorsprung und nicht den Außenring als Ganzes, endet also in radialer Richtung in Überdeckung mit dem Außenring. Selbstverständlich kann es jedoch auch vorgesehen sein, dass der Dichtungsaufnahmeraum in radialer Richtung des gesamten Außenring übergreift, sich also in radialer Richtung weiter nach außen erstreckt als dieser. In jedem Fall liegt das vorstehend bereits erwähnte Außenringende an dem Außenringvorsprung vor, sofern dieser existiert. Die beschriebene Ausgestaltung der Radlageranordnung kann in axialer Richtung äußerst kompakt ausgeführt sein.

Eine Weiterbildung der Erfindung sieht vor, dass der Dichtungsaufnahmeraum im Längsschnitt gesehen einen ersten Dichtungsaufnahmeraumbereich mit einer ersten Dichtungsraumaufnahmebreite und einen zweiten Dichtungsaufnahmeraumbereich mit einer von der ersten Dichtungsaufnahmeraumbreite verschiedenen zweiten Dichtungsaufnahmeraumbreite aufweist, wobei der erste Dichtungsaufnahmeraumbereich in radialer Richtung gesehen in Überdeckung mit dem Außenring in den zweiten Dichtungsaufnahmeraumbereich übergeht. Der Dichtungsaufnahmeraum kann also in wenigstens zwei Dichtungsaufnahmeraumbereiche, nämlich den ersten Dichtungsaufnahmeraumbereich und den zweiten Dichtungsaufnahmeraumbereich, unterteilt werden. Diese unterscheiden sich hinsichtlich ihrer Breite, also ihrer Erstreckung in axialer Richtung, sodass die erste Dichtungsaufnahmeraumbreite des ersten Dichtungsaufnahmeraumbereichs von der zweiten Dichtungsaufnahmeraumbreite des zweiten Dichtungsaufnahmeraumbereichs verschieden ist.

Der erste Dichtungsaufnahmeraumbereich ist in radialer Richtung weiter innenliegend angeordnet als der zweite Dichtungsaufnahmeraumbereich. In anderen Worten erstreckt sich der erste Dichtungsaufnahmeraumbereich in radialer Richtung bis zu einer Übergangsstelle und geht an dieser in den zweiten Dichtungsaufnahmeraumbereich über. Bevorzugt ist die erste Dichtungsaufnahmeraumbreite größer als die zweite Dichtungsaufnahmeraumbreite, sodass der Dichtungsaufnahmeraum in radialer Richtung weiter innen eine größere Breite aufweist als in radialer Richtung weiter außen.

Die Erstreckung der Dichtungsaufnahmeraumbereiche in radialer Richtung kann grundsätzlich gleich oder voneinander verschieden sein. Beispielsweise weist also der erste Dichtungsaufnahmeraumbereich in radialer Richtung dieselben Abmessungen auf wie der zweite Dichtungsaufnahmeraumbereich. Bevorzugt sind die Abmessungen der Dichtungsaufnahmeraumbereiche in radialer Richtung zumindest ähnlich, sodass also beispielsweise die Abmessungen in radialer Richtung des ersten Dichtungsaufnahmeraumbereichs mindestens 75 % und höchstens 125 % der Abmessungen des zweiten Dichtungsaufnahmeraumbereichs oder umgekehrt beträgt. Der Übergang zwischen dem ersten Dichtungsaufnahmeraumbereich und dem zweiten Dichtungsaufnahmeraumbereich erfolgt vorzugsweise in radialer Richtung gesehen in Überdeckung mit dem Außenring, insbesondere dem Außenringende des Außenrings, und/oder dem Außenringvorsprung.

Greift der Außenring in den Dichtungsaufnahmeraum ein, so erfolgt dies beispielsweise derart, dass im Längsschnitt gesehen ein größerer Teil des Außenrings beziehungsweise des Außenringvorsprungs in den zweiten Dichtungsaufnahmeraumbereich und lediglich ein kleinerer in den ersten Dichtungsaufnahmeraumbereich eingreift. Die unterschiedlichen Dichtungsaufnahmeraumbreiten ermöglichen die Verwendung einer Radlagerdichtung mit besonders guter Dichtwirkung. Beispielsweise liegt die Radlagerdichtung in dem ersten Dichtungsaufnahmeraum dichtend an dem Radflansch und abseits des ersten Dichtungsaufnahmeraumbereichs an dem Außenring an. Beispielsweise erstreckt sich hierzu die Radlagerdichtung durch den zweiten Dichtungsaufnahmeraumbereich hindurch in Richtung des Außenrings.

Eine Weiterbildung der Erfindung sieht vor, dass die Radlagerdichtung in dem ersten Dichtungsaufnahmebereich mit wenigstens einer Dichtlippe dichtend an dem Radflansch anliegt und sich aus dem ersten Dichtungsaufnahmeraumbereich in den zweiten Dichtungsaufnahmeraumbereich hineinerstreckt und im Längsschnitt in radialer Richtung gesehen in Überdeckung zu zumindest dem zweiten Dichtungsaufnahmeraumbereich an dem Außenring dichtend anliegt. Auf eine derartige Ausgestaltung wurde bereits hingewiesen. Sie ermöglicht die Verwendung einer Radlagerdichtung mit hinreichenden Abmessungen, um ein zuverlässiges Abdichten zwischen dem Radflansch und dem Außenring zu bewirken.

Die Radlagerdichtung weist die wenigstens eine Dichtlippe, bevorzugt jedoch mehrere Dichtlippen auf. Zumindest eine der Dichtlippen, vorzugsweise jedoch mehrere der Dichtlippen, liegen in dem ersten Dichtungsaufnahmeraumbereich an dem Radflansch an. Wenigstens eine andere der Dichtlippen, vorzugsweise jedoch wiederum mehrere der anderen Dichtlippen, liegen dichtend an dem Außenring an. Beispielsweise kann es hierbei vorgesehen sein, dass die Radlagerdichtung an dem Außenringende des Außenrings anliegt, insbesondere an einem Stirnende des Außenrings, welche dem Radflansch am nächsten liegt. Zusätzlich oder alternativ kann es vorgesehen sein, dass die Radlagerdichtung den Außenring auf seiner radial außenliegenden Seite zumindest teilweise übergreift und an der Außenumfangsfläche des Außenrings dichtend anliegt. Hierdurch wird eine besonders gute Dichtwirkung der Radlagerdichtung erzielt.

Eine Weiterbildung der Erfindung sieht vor, dass der Dichtungsaufnahmeraum - im Längsschnitt gesehen - in radialer Richtung mit einer die Radflanschstirnseite mit der Bremsscheibenanlagefläche zur Ausbildung des Rücksprungs verbindenden Schrägfläche überlappend angeordnet ist. Der Rücksprung ist also von der Schrägfläche ausgebildet. Die Schrägfläche liegt zumindest teilweise oder vollständig in einer gedachten Ebene, die gegenüber der Drehachse angewinkelt ist, mit ihr also einen Winkel einschließt, der größer als 0° und kleiner als 180° ist. Beispielsweise beträgt der Winkel mindestens 40° und höchstens 60°.

Die Schrägfläche liegt in axialer Richtung gesehen zwischen der Radflanschstirnseite und der Bremsscheibenanlagefläche vor. Sie begrenzt die Bremsscheibenaufnahme in radialer Richtung nach innen. Vorzugsweise ist die Schrägfläche derart ausgerichtet, dass ihr Abstand zu der Drehachse ausgehend von der Bremsscheibenanlagefläche hin zu der Radflanschstirnseite abnimmt. Im Längsschnitt gesehen ist diese Schrägfläche in radialer Richtung überlappend mit dem Dichtungsaufnahmeraum angeordnet. Hierdurch wird eine Gestalt des Radflanschs im Längsschnitt erzielt, welche die Gestalt eines S beziehungsweise eines gespiegelten S aufweist. In anderen Worten weist der Radflansch im Längsschnitt gesehen einen S-Schlag auf. Hierdurch wird eine kompakte Ausgestaltung der Radlageranordnung erzielt.

Eine Weiterbildung der Erfindung sieht vor, dass die Dichtungsaufnahmeraumbreite größer als eine in axialer Richtung zwischen einer Radanlagefläche und der Bremsscheibenanlagefläche (vorliegende Bremsscheibenaufnahmebreite ist. Dies ermöglicht wiederum die Verwendung einer Radlagerdichtung, welche das Radlager zuverlässig gegenüber Umgebungseinflüssen abdichtet. Ist eine gute Dichtwirkung nicht zwingend notwendig, so kann die Dichtungsaufnahmeraumbreite selbstverständlich auch höchstens der Bremsscheibenaufnahmebreite entsprechen oder kleiner sein als diese.

Eine Weiterbildung der Erfindung sieht vor, dass die in axialer Richtung zwischen einer Radanlagefläche und der Bremsscheibenanlagefläche vorliegende Bremsscheibenaufnahmebreite der Bremsscheibenaufnahme um einen Faktor von höchstens 1,25 größer ist als eine zwischen der Radflanschstirnseite und der Bremsscheibenanlagefläche vorliegende Radbolzenaufnahmebreite einer in dem Radflansch ausgebildeten Radbolzenaufnahme, wobei die Bremsscheibenaufnahmebreite der Radbolzenbreite entspricht oder kleiner ist als diese. Unter der Radanlagefläche ist, wie bereits erläutert, diejenige Stirnseite des Radflansches zu verstehen, die dem Radlager abgewandt ist. Die Bremsscheibenaufnahme liegt in axialer Richtung gesehen zwischen der Radanlagefläche und der Bremsscheibenanlagefläche vor. Der Abstand der Radanlagefläche in axialer Richtung entspricht insoweit der Bremsscheibenaufnahmebreite.

In dem Radflansch ist die wenigstens eine Radbolzenaufnahme ausgebildet, die der Aufnahme eines Radbolzens oder einer Radschraube dient, mittels welchem/welcher das Rad bei seiner Montage an dem Radflansch befestigt wird. Die Begriffe Bolzen und Schraube werden im Rahmen dieser Anmeldung grundsätzlich synonym verwendet. Die Radbolzenaufnahme durchgreift den Radflansch in axialer Richtung vorzugsweise vollständig. Eine Längsmittelachse der Radbolzenaufnahme verläuft weiter bevorzugt durchgehend gerade und ist insbesondere parallel zu der Drehachse oder zumindest nahezu parallel zu der Drehachse ausgerichtet.

Die Erstreckung der Radbolzenaufnahme in axialer Richtung wird als Radbolzenaufnahmebreite bezeichnet. Besonders bevorzugt ist die Bremsscheibenaufnahmebreite kleiner als die Radbolzenaufnahmebreite. Grundsätzlich ist es jedoch auch zulässig, wenn die Bremsscheibenaufnahmebreit geringfügig größer ist als die Radbolzenaufnahmebreite, nämlich maximal um einen Faktor von höchstens 1,25. Hierdurch wird eine zuverlässige Befestigung sowohl der Bremsscheibe als auch des Rads an dem Radflansch realisiert.

Eine Weiterbildung der Erfindung sieht vor, dass ein von dem Felgenzentriersitzelement ausgebildeter Felgenzentriersitz eine Felgenzentriersitzbreite aufweist, die in axialer Richtung gesehen zwischen der Radanlagefläche und einer der Radanlagefläche abgewandten Felgenzentriersitzstirnseite vorliegt und mindestens der Bremsscheibenaufnahmebreite und/oder höchstens der Radbolzenaufnahmebreite entspricht. Auf den an dem Felgenzentriersitzelement vorliegenden Felgenzentriersitz wurde bereits hingewiesen. Der Felgenzentriersitz beziehungsweise das Felgenzentriersitzelement weisen in axialer Richtung die Felgenzentriersitzbreite auf, die sich in eben dieser Richtung zwischen der Radanlagefläche und der Felgenzentriersitzstirnseite erstreckt. Die Felgenzentriersitzstirnseite schließt das Felgenzentriersitzelement beziehungsweise den Felgenzentriersitz die von dem Radflansch abgewandte Richtung in axialer Richtung ab.

Um ein zuverlässiges Zentrieren des Rads beziehungsweise der Felge durch den Felgenzentriersitz zu realisieren, soll dieser in axialer Richtung zumindest größer sein als die Bremsscheibenaufnahme. Folglich ist die Felgenzentriersitzbreite mindestens so groß wie die Bremsscheibenaufnahmebreite. Zur Erzielung einer besonders kompakten Ausgestaltung der Radlageranordnung ist jedoch bevorzugt die Felgenzentriersitzbreite auf die Größe der Radbolzenaufnahmebreite beschränkt, ist also kleiner oder gleich der Radbolzenaufnahmebreite. Eine solche Ausgestaltung der Radlageranordnung realisiert die bereits genannten Vorteile, nämlich eine einfache und zuverlässige Montage des Rads an dem Radflansch und eine kompakte Ausgestaltung in axialer Richtung.

Eine Weiterbildung der Erfindung sieht vor, dass das Felgenzentriersitzelement einen größeren Innendurchmesser aufweist als die Radnabe. Sowohl die Radnabe als auch das Felgenzentriersitzelement weisen einen zentralen Innenraum auf, wobei der Innenraum der Radnabe ohne Unterbrechung in den Innenraum des Felgenzentriersitzelements übergeht. Hierbei erfolgt jedoch eine Aufweitung des Innenraums, sodass der Innenraum des Felgenzentriersitzelements im Vergleich mit dem Innendurchmesser der Radnabe größer ist. Der jeweilige Innenraum liegt in Form eines Hohlraums vor. Hierdurch wird eine Gewichtsreduzierung der Radlageranordnung realisiert. Beispielsweise sind die unterschiedlichen Innendurchmesser mittels eines Innendurchmessersprungs ausgebildet. Das bedeutet, dass sich der Innenraum ausgehend von dem Innenraum der Radnabe in Richtung des Innenraums des Felgenzentriersitzelements schlagartig aufweitet, nämlich unter Ausbildung einer Stufe.

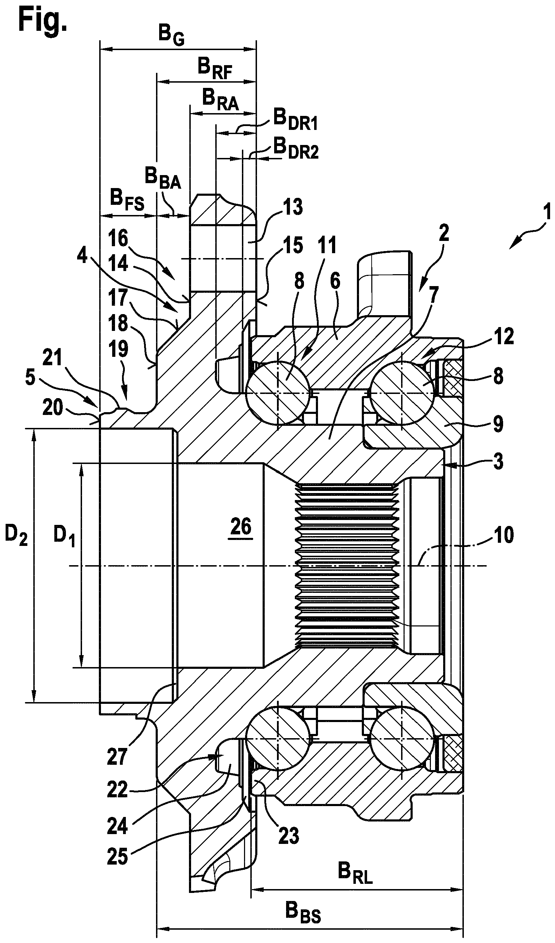

Die Erfindung wird nachfolgend anhand der in der Zeichnung dargestellten Ausführungsbeispiele erläutert, ohne dass eine Beschränkung der Erfindung erfolgt. Dabei zeigt die einzige
- Figur: eine schematische Längsschnittdarstellung einer Radlageranordnung für ein Kraftfahrzeug.

Die Figur zeigt eine schematische Längsschnittdarstellung durch einen Bereich einer Radlageranordnung 1 für ein Kraftfahrzeug. Von der Radlageranordnung 1 sind insbesondere ein Radlager 2, eine Radnabe 3, ein Radflansch 4 sowie ein Felgenzentriersitzelement 5 dargestellt. Das Radlager 2 verfügt über einen Außenring 6 sowie einen Innenring 7. Es ist als Wälzlager ausgestaltet, sodass zwischen dem Außenring 6 und dem Innenring 7 Wälzkörper 8 angeordnet sind, welche eine Reibungsreduzierung zwischen dem Außenring 6 und dem Innenring 7 bewirken. In dem hier dargestellten Ausführungsbeispiel ist der Innenring 7 des Radlagers 2 mit der Radnabe 3 integriert ausgestaltet, sodass die Radnabe 3 selbst eine Lauffläche für einen oder mehrere der Wälzkörper 8 aufweist. Selbstverständlich kann der Innenring 7 jedoch separat von der Radnabe 3 ausgestaltet sein.

Zusätzlich zu dem Innenring 7 ist ein weiterer Innenring 9 des Radlagers 2 dargestellt, der ebenfalls eine Lauffläche für wenigstens einen oder mehrere der Wälzkörper 8 ausbildet. Der Innenring 9 ist vorzugsweise separat von dem Innenring 7 beziehungsweise der Radnabe 3 ausgebildet. Beispielsweise wird er nach dem Außenring 6 und den Wälzkörpern 8 oder gemeinsam mit diesen an dem Innenring 7 und/oder der Radnabe 3 angeordnet. Der weitere Innenring 9 ist beispielsweise durch die Ausbildung eines Wälznietbunds an der Radnabe 3 an dieser in axialer Richtung festgesetzt. Der Wälznietbund wird durch Aufweiten der Radnabe 3 in radialer Richtung hergestellt.

Der Innenring 7 und die an ihm angeordnete beziehungsweise befestigte Radnabe 3 sind in dem Außenring 6 angeordnet. Die Radnabe 3 ragt jedoch in axialer Richtung aus diesem heraus. An dieser Stelle gehen von der Radnabe 3 sowohl der Radflansch 4 als auch das Felgenzentriersitzelement 5 aus, nämlich der Radflansch 4 in radialer Richtung nach außen und das Felgenzentriersitzelement 5 in axialer Richtung in die von dem Radlager 2 abgewandte Richtung. Der Radflansch 4 erstreckt sich in radialer Richtung über die Wälzkörper 8 und den Außenring 6 hinweg. Mithilfe des Radlagers 2 sind die Radnabe 3, der Radflansch 4 und das Felgenzentriersitzelement 5 um eine Drehachse 10 bezüglich eines Radträgers (hier nicht dargestellt) drehbar gelagert. Das Radlager 2 liegt als mehrreihiges Wälzlager vor, sodass die Wälzkörper 8 in zwei in axialer Richtung bezüglich der Drehachse 10 voneinander beabstandete Wälzkörperreihen 11 und 12 aufgeteilt sind.

An dem Radflansch 4 sind eine hier nicht dargestellte Bremsscheibe sowie ein ebenfalls nicht dargestelltes Rad des Kraftfahrzeugs befestigbar oder befestigt. Die Befestigung des Rads an dem Radflansch 4 erfolgt mittels wenigstens eines nicht gezeigten Radbolzens, zu dessen Aufnahme der Radflansch 4 eine Radbolzenaufnahme 13 aufweist. Die Radbolzenaufnahme 13 durchgreift einerseits eine Bremsscheibenanlagefläche 14 und eine dieser abgewandte Radflanschstirnseite 15. Die Bremsscheibenanlagefläche 14 begrenzt eine Bremsscheibenaufnahme 16 in axialer Richtung, nämlich in Richtung des Radlagers 2.

In radialer Richtung nach innen wird die Bremsscheibenaufnahme 16 hingegen von einer Außenumfangsfläche 17 des Radflanschs 4 begrenzt, welche in dem hier dargestellten Ausführungsbeispiel als Schrägfläche ausgebildet ist. Zur Ausbildung der Außenumfangsfläche 17 ist insoweit die Radnabe 3 bereichsweise konisch ausgeführt. Vorzugsweise liegt die Bremsschiebenanlagefläche 14 durchgehend in einer gedachten Ebene, welche bevorzugt senkrecht auf der Drehachse 10 steht. Die Außenumfangsfläche 17 ist bevorzugt ebenso im Längsschnitt gesehen plan.

In axialer Richtung auf der der Bremsscheibenanlagefläche 14 abgewandten Seite der Bremsscheibenaufnahme 16 weist der Radflansch 4 eine Radanlagefläche 18 auf, an welcher ein Rad des Kraftfahrzeugs nach seiner Montage anliegt. Die Radanlagefläche liegt vorzugsweise durchgehend in einer gedachten Ebene, welche weiter bevorzugt senkrecht auf der Drehachse 10 steht. Insgesamt wird der Radflansch 4 in axialer Richtung gesehen einerseits von der Radflanschstirnseite 15 und andererseits von der Radanlagefläche 18 begrenzt.

Das Felgenzentriersitzelement 5 bildet einen Felgenzentriersitz 19 aus, der sich in axialer Richtung gesehen von der Radanlagefläche 18 bis hin zu einer Felgenzentriersitzstirnseite 20 erstreckt. Es kann vorgesehen sein, dass von dem Felgenzentriersitzelement 5 wenigstens ein Radialvorsprung 21 ausgeht, der in Umfangsrichtung durchgehend oder unterbrochen ausgebildet ist.

Zur Abdichtung des Radlagers 2 gegenüber Außeneinflüssen ist wenigstens eine hier nicht dargestellte Radlagerdichtung vorgesehen. Diese ist zumindest bereichsweise in einem Dichtungsaufnahmeraum 22 angeordnet, der in dem Radflansch 4 ausgebildet ist. In dem hier dargestellten Ausführungsbeispiel der Radlageranordnung 1 greift der Außenring 6 mit einem Außenringende 23 in den Dichtungsaufnahmeraum 22 ein, sodass also in axialer Richtung gesehen der Außenring 6 und der Radflansch 4 in Überdeckung miteinander vorliegen. Hierdurch wird eine besonders kompakte Ausgestaltung der Radlageranordnung 1 in axialer Richtung realisiert.

In jedem Fall ist es jedoch vorgesehen, dass der Dichtungsaufnahmeraum 22 den Außenring 6 oder zumindest sein Außenringende 23 in radialer Richtung nach außen übergreift, sodass sich also der Dichtungsaufnahmeraum 22 in radialer Richtung weiter nach außen erstreckt als der Außenring 6 oder zumindest das Außenringende 23. Dies ermöglicht zumindest eine äußerst nahe Anordnung des Außenrings 6 an dem Radflansch 4, sodass beispielsweise der Außenring 6 und der Radflansch 4 bündig miteinander abschlie-ßen.

Es ist erkennbar, dass der Dichtungsaufnahmeraum 22 gestuft ausgebildet ist und insoweit einen ersten Dichtungsaufnahmeraumbereich 24 und einen zweiten Dichtungsaufnahmeraumbereich 25 aufweist, die sich durch unterschiedliche Dichtungsaufnahmeraumbreiten auszeichnen. Die Dichtungsaufnahmeraumbreite des ersten Dichtungsaufnahmeraumbereichs 24 kann als erste Dichtungsaufnahmeraumbreite B_{DR1} und die Dichtungsaufnahmeraumbreite des zweiten Dichtungsaufnahmeraumbereichs 25 als zweite Dichtungsaufnahmeraumbreite B_{DR2} bezeichnet werden.

Als weitere Abmessungen weist die Radbolzenaufnahme 13 eine Radbolzenaufnahmebreite B_{RA} auf, die Bremsscheibenaufnahme 16 eine Bremsscheibenaufnahmebreite B_{BA} und der Felgenzentriersitz 19 eine Felgenzentriersitzbreite B_{FS} auf. Weiterhin weist der Radflansch 4 eine Radflanschbreite B_{RF} auf, welche sich aus der Radbolzenaufnahmebreite B_{RA} und der Bremsscheibenaufnahmebreite B_{BA} zusammensetzt. Eine Summe aus der Radflanschbreite B_{RF} und der Felgenzentriersitzbreite B_{FS} wird als Gesamtbreite B_{G} bezeichnet. Weiterhin angedeutet sind eine Lagereinheitsbreite B_{BS}, die den Abstand in axialer Richtung zwischen der Bremsscheibenanlagefläche 14 und einer dem Radflansch 4 abgewandten Stirnseite des Außenrings 6 bezeichnet. Die Erstreckung des Außenrings 6 in axialer Richtung wird als Außenringbreite B_{RL} bezeichnet.

Es ist weiterhin erkennbar, dass die Radnabe 3 und das Felgenzentriersitzelement 5 einen gemeinsamen Innenraum 26 aufweisen, der im Bereich der Radnabe 3 einen Innendurchmesser D₁ und im Bereich des Felgenzentriersitzelements 5 einen Innendurchmesser D₂ aufweist. Hierbei ist der Durchmesser D₂ größer als der Durchmesser D₁. Die Aufweitung des Innenraums 6 ausgehend von der Radnabe 3 hin zu dem Felgenzentriersitzelement 5 wird bevorzugt durch einen Innendurchmessersprung 27 bewirkt, durch welchen eine Stufe 27 ausgebildet ist. Der Innenraum 26 liegt insoweit als gestufter Innenraum vor.

Die beschriebene Ausgestaltung der Radlageranordnung 1 zeichnet sich zum einen durch eine einfache Montage des Rads aus, nämlich aufgrund des Felgenzentriersitzelements 5 beziehungsweise des Felgenzentriersitzes 19. Zum anderen weist sie in axialer Richtung eine äußerst kompakte Bauform auf.

### BEZUGSZEICHENLISTE:

- 1: Radlageranordnung
- 2: Radlager
- 3: Radnabe
- 4: Radflansch
- 5: Felgenzentriersitzelement
- 6: Außenring
- 7: Innenring
- 8: Wälzkörper
- 9: Innenring
- 10: Drehachse
- 11: Wälzkörperreihe
- 12: Wälzkörperreihe
- 13: Radbolzenaufnahme
- 14: Bremsscheibenanlagefläche
- 15: Radflanschstirnseite
- 16: Bremsscheibenaufnahme
- 17: Außenumfangsfläche
- 18: Radanlagefläche
- 19: Felgenzentriersitz
- 20: Felgenzentriersitzstirnseite
- 21: Radialvorsprung
- 22: Dichtungsaufnahmeraum
- 23: Außenringende
- 24: 1. Dichtungsaufnahmeraumbereich
- 25: 2. Dichtungsaufnahmeraumbereich
- 26: Innenraum
- 27: Stufe

## Patentansprüche

1. Radlageranordnung (1) für ein Kraftfahrzeug, mit einer Radnabe (3) und einem Radlager (2) zur drehbaren Lagerung der Radnabe (3) an einem Radträger, wobei das Radlager (2) einen Außenring (6) und einen bezüglich des Außenrings (6) um eine Drehachse (10) drehbaren Innenring (7) aufweist, der mit der Radnabe (3) verbunden ist, wobei von der Radnabe (3) in radialer Richtung ein Radflansch (4) ausgeht, der eine in axialer Richtung gesehen in die von dem Außenring (6) abgewandte Richtung offene Bremsscheibenaufnahme (16) aufweist, die im Längsschnitt gesehen durch einen Rücksprung des Radflanschs (4) gebildet ist, wobei die Bremsscheibenaufnahme (16) in radialer Richtung nach innen von einer durch den Rücksprung gebildeten Außenumfangsfläche (17) begrenzt ist und eine Bremsscheibenanlagefläche (14) für eine Bremsscheibe aufweist, wobei in dem Radflansch (4) auf seiner dem Außenring (6) in axialer Richtung zugewandten Seite ein Dichtungsaufnahmeraum (22) ausgebildet ist, in dem eine Radlagerdichtung vorliegt, **dadurch gekennzeichnet, dass** sich die Außenumfangsfläche (17) in axialer Richtung gesehen von der Bremsscheibenanlagefläche (14) bis hin zu einer Radanlagefläche (18) erstreckt, wobei von der Radanlagefläche (18) ein Felgenzentriersitzelement (5) ausgeht, das sich in die der Bremsscheibenanlagefläche (14) bezüglich der Bremsscheibenaufnahme (16) gegenüberliegende Richtung erstreckt.

2. Radlageranordnung nach Anspruch 1, **dadurch gekennzeichnet, dass** der Dichtungsaufnahmeraum (22) in radialer Richtung ein dem Radflansch (4) zugewandtes Außenringende (23) des Außenrings (6) übergreift.

3. Radlageranordnung nach einem der vorhergehenden Ansprüche, **dadurch gekennzeichnet, dass** der Außenring (6) des Radlagers (2) mit einer dem Außenring (6) zugewandten Radflanschstirnseite (15) des Radflanschs (4) bündig abschließt oder zumindest mit einem Außenringvorsprung in den Dichtungsaufnahmeraum (22) eingreift.

4. Radlageranordnung nach einem der vorhergehenden Ansprüche, **dadurch gekennzeichnet, dass** der Dichtungsaufnahmeraum (22) im Längsschnitt gesehen einen ersten Dichtungsaufnahmeraumbereich (24) mit einer ersten Dichtungsaufnahmeraumbreite (B_{DR1}) und einen zweiten Dichtungsaufnahmeraumbereich (25) mit einer von der ersten Dichtungsaufnahmeraumbreite (B_{DR1}) verschiedenen zweiten Dichtungsaufnahmeraumbreite (B_{DR2}) aufweist, wobei der erste Dichtungsaufnahmeraumbereich (24) in radialer Richtung gesehen in Überdeckung mit dem Außenring (6) in den zweiten Dichtungsaufnahmeraumbereich (25) übergeht.

5. Radlageranordnung nach Anspruch 4, **dadurch gekennzeichnet, dass** die Radlagerdichtung in dem ersten Dichtungsaufnahmeraumbereich (24) mit wenigstens einer Dichtlippe dichtend an dem Radflansch (4) anliegt und sich aus dem ersten Dichtungsaufnahmeraumbereich (24) in den zweiten Dichtungsaufnahmeraumbereich (25) hinein erstreckt und im Längsschnitt in radialer Richtung gesehen in Überdeckung zu zumindest dem zweiten Dichtungsaufnahmebereich (25) an dem Außenring (6) dichtend anliegt.

6. Radlageranordnung nach einem der vorhergehenden Ansprüche, **dadurch gekennzeichnet, dass** der Dichtungsaufnahmeraum (22) - im Längsschnitt gesehen - in radialer Richtung mit einer die Radflanschstirnseite (15) mit der Bremsscheibenanlagefläche (14) zur Ausbildung des Rücksprungs verbindenden Schrägfläche (17) überlappend angeordnet ist.

7. Radlageranordnung nach einem der vorhergehenden Ansprüche, **dadurch gekennzeichnet, dass** die Dichtungsaufnahmeraumbreite (B_{DR1}) größer als eine in axialer Richtung zwischen der Radanlagefläche (18) und der Bremsscheibenanlagefläche (14) vorliegende Bremsscheibenaufnahmebreite (B_{BA}) ist.

8. Radlageranordnung nach einem der vorhergehenden Ansprüche, **dadurch gekennzeichnet, dass** die Bremsscheibenaufnahmebreite (B_{BA}) der Bremsscheibenaufnahme (16) um einen Faktor von höchstens 1,25 größer ist als eine zwischen der Radflanschstirnseite (15) und der Bremsscheibenanlagefläche (14) vorliegende Radbolzenaufnahmebreite (B_{RA}) einer in dem Radflansch (4) ausgebildeten Radbolzenaufnahme (13), oder dass die Bremsscheibenaufnahmebreite (B_{BA}) der Radbolzenaufnahmebreit (B_{RA}) entspricht oder kleiner ist als diese.

9. Radlageranordnung nach Anspruch 8, **dadurch gekennzeichnet, dass** ein von dem Felgenzentriersitzelement (5) ausgebildeter Felgenzentriersitz (19) eine Felgenzentriersitzbreite (B_{FS}), die in axialer Richtung gesehen zwischen der Radanlagefläche (18) und einer der Radanlagefläche (18) abgewandten Felgenzentriersitzstirnseite (20) vorliegt und mindestens der Bremsscheibenaufnahmebreite (B_{BA}) und/oder höchstens der Radbolzenaufnahmebreite (B_{RA}) entspricht.

10. Radlageranordnung nach einem der vorhergehenden Ansprüche, **dadurch gekennzeichnet, dass** das Felgenzentriersitzelement (5) einen größeren Innendurchmesser (D₂) aufweist als die Radnabe (3).

## Claims

1. Wheel bearing arrangement (1) for a motor vehicle, having a wheel hub (3) and a wheel bearing (2) for the rotational mounting of the wheel hub (3) to a wheel carrier, wherein the wheel bearing (2) has an outer ring (6) and an inner ring (7), rotatable with regard to the outer ring (6) around a rotation axis (10), which is connected to the wheel hub (3), wherein a wheel flange (4) projects in radial direction from the wheel hub (3), which wheel flange has a brake disc receptacle (16) open in the direction facing away from the outer ring (6), viewed in axial direction, which, viewed in longitudinal section, is formed by a recess of the wheel flange (4), wherein the brake disc receptacle (16) is limited in radial direction the inside by an outer circumferential surface (17) formed by the recess and has a brake disc bearing surface (14) for a brake disc, wherein in the wheel flange (4) is formed, on its side facing towards the outer ring (6) in axial direction, a seal receiving space (22) in which a wheel bearing seal is present, **characterised in that** the outer circumferential surface (17) extends from the brake disc bearing surface (14) as far as a wheel bearing surface (18), viewed in axial direction, wherein from the wheel bearing surface (18) projects a rim centring seat element (5) which extends in the direction opposite to the brake disc bearing surface (14) with respect to the brake disc receptacle (16).

2. Wheel bearing arrangement according to claim 1, **characterized in that** the seal receiving space (22) overlaps in radial direction an outer ring end (23) of the outer ring (6) facing towards the wheel flange (4).

3. Wheel bearing arrangement according to any of the preceding claims, **characterized in that** the outer ring (6) of the wheel bearing (2) finishes flush with a wheel flange end face (15) of the wheel flange (4) facing towards the outer ring (6), or at least engages with an outer ring protrusion into the seal receiving space (22).

4. Wheel bearing arrangement according to any of the preceding claims, **characterized in that** the seal receiving space (22) viewed in longitudinal section has a first seal receiving space region (24) having a first seal receiving space breadth (B_{DR1}) and a second seal receiving space region (25) having a second seal receiving space breadth (B_{DR2}) different from the first seal receiving space breadth B_{DR1}), wherein the first seal receiving space region (24) viewed in radial direction transitions into the second seal receiving space region (25) in such a way as to overlap with the outer ring (6).

5. Wheel bearing arrangement according to claim 4, **characterized in that** the wheel bearing seal in the first seal receiving space region (24) rests with at least one sealing lip sealingly on the wheel flange (4) and extends from the first seal receiving space region (24) into the second seal receiving space region (25) and in longitudinal section viewed in radial direction rests sealingly on the outer ring (6) overlapping with at least the second seal receiving region (25).

6. Wheel bearing arrangement according to any of the preceding claims, **characterized in that** the seal receiving space (22), viewed in longitudinal section, is arranged overlappingly in radial direction with an oblique surface (17) connecting the wheel flange end face (15) to the brake disc bearing surface (14) for forming the recess.

7. Wheel bearing arrangement according to any of the preceding claims, **characterized in that** the seal receiving space breadth (B_{DR1}) is greater than a brake disc receiving breadth (B_{BA}) present in axial direction between the wheel bearing surface (18) and the brake disc bearing surface (14).

8. Wheel bearing arrangement according to any of the preceding claims, **characterized in that** the brake disc receiving breadth (B_{BA}) of the brake disc reception (16) is greater by a factor of maximum 1.25 than a wheel bolt receiving breadth (B_{RA}), present between the wheel flange end face (15) and the brake disc bearing surface (14), of a wheel bolt reception (13) formed in the wheel flange (4), or that the brake disc reception breadth (B_{BA}) is equal to the wheel bolt receiving breadth (B_{RA}) or is less than it.

9. Wheel bearing arrangement according to claim 8, **characterized in that** a rim inspection seat (19) a rim inspection seat breadth (BFS), which viewed in axial direction is present between the wheel bearing surface (18) and a rim inspection seat end face (20) facing away from the wheel bearing surface (18) and is equal at least to the brake disc receiving breadth (B_{BA}) and/or at most to the wheel bolt receiving breadth (B_{RA}).

10. Wheel bearing arrangement according to any one of previous claims, **characterized in**
**that** the rim centering element (5) has a greater inner diameter (D₂) than the wheel hub (3).

## Revendications

1. Ensemble de palier de roue (1) pour un véhicule automobile, avec un moyeu de roue (3) et un palier de roue (2) pour le logement rotatif du moyeu de roue (3) au niveau d'un support de roue, dans lequel le palier de roue (2) présente un anneau extérieur (6) et un anneau intérieur (7) rotatif par rapport à l'anneau extérieur (6) autour d'un axe de rotation (10), anneau intérieur qui est relié au moyeu de roue (3), dans lequel une bride de roue (4) sort du moyeu de roue (3) dans le sens radial, bride qui présente un logement de disque de frein (16) ouvert, vu dans le sens axial, en s'éloignant de l'anneau extérieur (6), logement qui est formé, vu en coupe longitudinale, par un décrochement de la bride de roue (4), dans lequel le logement de disque de frein (16) est délimité dans le sens radial vers l'intérieur par une surface périphérique extérieure (17) formée par le décrochement et présente une surface d'appui de disque de frein (14) pour un disque de frein, dans lequel un espace de réception de joint d'étanchéité (22) est réalisé dans la bride de roue (4) sur son côté tourné vers l'anneau extérieur (6) dans le sens axial, espace dans lequel se trouve un joint d'étanchéité de palier de roue, **caractérisé en ce que** la surface périphérique extérieure (17) s'étend, vu dans le sens axial, de la surface d'appui de disque de frein (14) jusqu'à une surface d'appui de roue (18), dans lequel un élément de siège de centrage de jante (5) sort de la surface d'appui de roue (18), élément qui s'étend dans la direction opposée à la surface d'appui de disque de frein (14) par rapport au logement de disque de frein (16).

2. Ensemble de palier de roue selon la revendication 1, **caractérisé en ce que** l'espace de réception de joint d'étanchéité (22) recouvre dans le sens radial une extrémité d'anneau extérieur (23) tournée vers la bride de roue (4) de l'anneau extérieur (6).

3. Ensemble de palier de roue selon l'une quelconque des revendications précédentes, **caractérisé en ce que** l'anneau extérieur (6) du palier de roue (2) se termine à fleur avec un côté frontal de bride de roue (15) tourné vers l'anneau extérieur de la bride de roue (4) ou s'engage au moins avec une saillie d'anneau extérieur dans l'espace de logement de joint d'étanchéité (22).

4. Ensemble de palier de roue selon l'une quelconque des revendications précédentes, **caractérisé en ce quel**'espace de réception de joint d'étanchéité (22) présente, vu en coupe longitudinale, une première zone d'espace de réception de joint d'étanchéité (24) avec une première largeur d'espace de réception de joint d'étanchéité (B_{DR1}) et une seconde zone d'espace de réception de joint d'étanchéité (25) avec une seconde largeur d'espace de réception de joint d'étanchéité (B_{DR2}) différente de la première largeur d'espace de réception de joint d'étanchéité (B_{DR1}), dans lequel la première zone d'espace de réception de joint d'étanchéité (24) passe, vu dans le sens radial, dans la seconde zone d'espace de réception de joint d'étanchéité (25) de manière à recouvrir l'anneau extérieur (6).

5. Ensemble de palier de roue selon la revendication 4, **caractérisé en ce que** le joint d'étanchéité de palier de roue repose dans la première zone d'espace de réception de joint d'étanchéité (24) avec au moins une lèvre d'étanchéité de manière étanche contre la bride de roue (4) et s'étend à partir de la première zone d'espace de réception de joint d'étanchéité (24) dans la seconde zone d'espace de réception de joint d'étanchéité (25) et repose de manière étanche en coupe longitudinale, vu dans le sens radial, contre l'anneau extérieur (6) en recouvrant au moins la seconde zone de réception de joint d'étanchéité (25).

6. Ensemble de palier de roue selon l'une quelconque des revendications précédentes, **caractérisé en ce que** l'espace de réception de joint d'étanchéité (22) - vu en coupe longitudinale - est agencé en chevauchant dans le sens radial avec une surface oblique (17) reliant le côté frontal de bride de roue (15) avec la surface d'appui de disque de frein (14) pour réaliser le retrait.

7. Ensemble de palier de roue selon l'une quelconque des revendications précédentes, **caractérisé en ce que** la largeur d'espace de réception de joint d'étanchéité (B_{DR1}) est supérieure à une largeur de réception de disque de frein (B_{BA}) présente dans le sens axial entre la surface d'appui de roue (18) et la surface d'appui de disque de frein (14).

8. Ensemble de palier de roue selon l'une quelconque des revendications précédentes, **caractérisé en ce que** la largeur de réception de disque de frein (B_{BA}) du logement de disque de frein (16) est supérieure d'un facteur d'au plus 1,25 à une largeur de réception de boulon de roue (B_{RA}) présente entre le côté frontal de bride de roue (15) et la surface d'appui de disque de frein (14) d'un logement de boulon de roue (13) réalisé dans la bride de roue (4), ou **en ce que** la largeur de réception de disque de frein (B_{BA}) correspond à la largeur de réception de boulon de roue (B_{RA}) ou est inférieure à celle-ci.

9. Ensemble de palier de roue selon la revendication 8, **caractérisé en ce qu'**un siège de centrage de jante (19) réalisé par l'élément de siège de centrage de jante (5) présente, vu dans le sens axial, une largeur de siège de centrage de jante (BFS) entre la surface d'appui de roue (18) et un côté frontal de siège de centrage de jante (20) en s'éloignant de la surface d'appui de roue (18) et correspond au moins à la largeur de réception de disque de frein (B_{BA}) et/ou au plus à la largeur de réception de boulon de roue (B_{RA}).

10. Ensemble de palier de roue selon l'une quelconque des revendications précédentes, **caractérisé en ce que**
l'élément de siège de centrage de jante (5) présente un diamètre intérieur (D₂) supérieur au moyeu de roue (3).
